# EUROPEAN PATENT APPLICATION

(11) **EP 4 653 997 A1**
(43) Date of publication of application: **26.11.2025**
(21) Application number: 23953347.4
(22) Date of filing: 25.09.2023
(51) Int. Cl.: G06F 3/06

(54) **METHOD FOR OPERATING STORAGE SYSTEM, AND CONTROLLER, STORAGE SYSTEM AND ELECTRONIC DEVICE**

(71) Applicant: Yangtze Memory Technologies Co., Ltd., Wuhan, Hubei 430000 (CN)
(72) Inventor: CHENG, Mo, Wuhan, Hubei 430000 (CN); TAN, Hua, Wuhan, Hubei 430000 (CN)
(74) Representative: Gramm, Lins & Partner Patent- und Rechtsanwälte PartGmbB
(86) International application number: PCT/CN2023/121241
(87) International publication number: WO 2025/065183

(57) **Abstract**

Examples of the present application relate to a method of operating a memory system, a controller, a memory system and an electronic device, and relate to but are not limited to the field of memory technology. The method includes: in response to a first command comprising a first logical address of first data on which an operation is to be performed is received, determining at least one zone corresponding to the first logical address, the at least one zone corresponding to a first storage space of a memory of the memory system; obtaining at least one first physical page address corresponding to the at least one zone according to a first mapping relationship and the at least one zone determined; and performing the operation on the first data in the first storage space according to the at least one first physical page address, wherein a storage capacity of one of the zones is less than a storage capacity corresponding to a physical block of the memory, and the first storage space is a storage space that only supports sequential read and sequential write. In this way, zoned storage of the memory system can be implemented.

## Description

### TECHNICAL FIELD

Examples of the present application relate to, but are not limited to, the field of memory technology, and in particular, to a method of operating a memory system, a controller, a memory system, and an electronic device.

### BACKGROUND

With the advancement of memory technology, flash memory (such as NAND flash memory) is increasingly used in devices such as mobile phones and computers.

Zoned universal flash storage (zoned UFS) protocol can improve memory performance. This protocol enables the memory in the memory system to be divided into zones and the zoned information to be opened to upper-level applications, and the upper-level applications perform zoned storage by taking their own services into account. How to implement zoned storage in the memory system has become an urgent problem to be solved.

### SUMMARY

Examples of the present application provide a method of operating a memory system, a controller, a memory system, and an electronic device to implement zoned storage of the memory system.

To achieve the above objects, the examples of this application adopt the following technical solutions.

In a first aspect, it is provided a method of operating a memory system, comprising: in response to a first command comprising a first logical address of first data on which an operation is to be performed is received, determining at least one zone corresponding to the first logical address, the at least one zone corresponding to a first storage space of a memory of the memory system; obtaining at least one first physical page address corresponding to the at least one zone according to a first mapping relationship and the at least one zone determined; and performing the operation on the first data in the first storage space according to the at least one first physical page address, wherein a storage capacity of one of the zones is less than a storage capacity corresponding to a physical block of the memory, and the first storage space is a storage space that only supports sequential read and sequential write.

In the above technical solution, the first storage space of the memory of the memory system is divided into multiple zones, and the first storage space is a storage space that only supports sequential read and sequential write. When receiving the first command to operate on the first data, at least one zone may be determined according to the first logical address of the first data included in the first command. At least one first physical page address corresponding to at least one zone can be obtained according to the first mapping relationship between the at least one zone and multiple physical page addresses (the multiple physical page addresses include the at least one first physical page address). If the first logical address corresponds to a zone, at least one first physical page address corresponding to this zone is obtained, and if the first logical address corresponds to multiple zones, at least one first physical page address corresponding to each of the multiple zones is obtained. The operation indicated by the first command can be performed on the first data in the first storage space according to the obtained at least one first physical page address. In this way, zoned storage of the memory system can be achieved by determining the zone according to the first logical address and then obtaining the first physical page address according to the first mapping relationship, thereby realizing the benefits produced from zoned storage.

In a possible example of the first aspect, the obtaining at least one first physical page address corresponding to the at least one zone according to a first mapping relationship and the at least one zone determined comprises: determining the at least one first physical page address in a pointer mode based on the first mapping relationship and the at least one zone. In the above possible example, multiple physical page addresses corresponding to each of the at least one zone can be obtained based on the first mapping relationship and at least one zone. In the pointer mode, at least one first physical page address can be determined from the multiple physical page addresses corresponding to each zone. In this way, a basis for implementing zoned storage of the memory system may be provided.

In a possible example of the first aspect, the first command is to instruct to write the first data, and the first command further comprises the first data, and the performing the operation on the first data in the first storage space according to the at least one first physical page address comprises: writing the first data at the at least one physical address in the first storage space. In the above possible example, the first command is to instruct to write the first data. In the case where the first mapping relationship has been established, at least one first physical page address can be obtained directly according to the first mapping relationship, and the first data is written at the at least one physical address in the first storage space. In this way, not only the basis for implementing zoned storage of the memory system is provided, but also the data writing operation is implemented in a simple and convenient manner, with shorter writing time and faster writing speed.

In a possible example of the first aspect, the method further comprise: before the obtaining at least one first physical page address corresponding to the at least one zone according to a first mapping relationship and the at least one zone determined, establishing the first mapping relationship in which the at least one zone corresponds to a plurality of physical page addresses, the plurality of physical page addresses comprising the at least one first physical page address; and writing the first mapping relationship in which the at least one zone corresponds to the plurality of physical page addresses into the memory. In the above possible example, the first command is to instruct to write the first data. In the case where the first mapping relationship has not been established, after receiving the first command, the first mapping relationship in which the at least one zone corresponds to the plurality of physical page addresses is first established, wherein the plurality of physical page addresses comprise the at least one first physical page address, and then the first data is written at the at least one physical address in the first storage space. Furthermore, the first mapping relationship in which the at least one zone corresponds to the plurality of physical page addresses is written into the memory. In this way, it not only provides a basis for implementing zoned storage of the memory system, but also facilitates subsequent use of the first mapping relationship. For the first storage space, the first mapping relationship needs to be established once each time a zone of data is written, instead of established once each time a logical page of data is written. At the overall level of data writing, the number of times to establish the first mapping relationship is less, the number times of instruction interactions is less, and the writing speed is faster.

In a possible example of the first aspect, the first command is to instruct to read the first data, and the performing the operation on the first data in the first storage space according to the at least one first physical page address comprises: reading the first data at the at least one first physical page address in the first storage space. In the above possible example, the first command is to instruct to read the first data, and the first mapping relationship has been established. When the first command is received, at least one first physical page address can be obtained directly according to the first mapping relationship so as to read the first data at the at least one first physical page address in the first storage space. In this way, not only the basis for implementing zoned storage of the memory system is provided, but also the data reading operation is implemented in a simple and convenient manner, with shorter reading time and faster reading speed.

In a possible example of the first aspect, a controller of the memory system comprises a cache in which the first mapping relationship is stored. In the above possible example, the cache in the controller can store the first mapping relationship. When the controller needs to obtain the first mapping relationship, it does not need to obtain the first mapping relationship from the memory every time, but can directly obtain the first mapping relationship from the cache. The speed of obtaining the first mapping relationship by the controller is faster, and the controller can operate on the data more efficiently.

In a possible example of the first aspect, the first mapping relationship is a two-level mapping relationship. In the above possible example, the first mapping relationship is a two-level mapping relationship. Compared with a three-level mapping relationship or more-level mapping relationships, less storage space is occupied for the two-level mapping relationship, which can save the storage capacity of the memory system.

In a possible example of the first aspect, the method further comprises: in response to a second command comprising a second logical address of second data on which an operation is to be performed is received, obtaining a second physical page address corresponding to the second logical address according to a second mapping relationship, the second logical address corresponding to a second storage space of the memory; and performing the operation on the second data in the second storage space according to the second physical page address, wherein the second storage space is a storage space that can support random read or random write. In the above possible example, the first storage space is a storage space that only supports sequential read and sequential write, and the second storage space is a storage space that can support random read or random write. For the first data that can be sequentially written or sequentially read, at least one first physical page address corresponding to the first logical address of the first data is obtained according to the first command and the first mapping relationship, and the operation is performed on the first data in the first storage space according to the at least one physical page address. For the second data that needs to be randomly written or randomly read, the second physical page address corresponding to the second logical address of the second data is obtained according to the second command and the second mapping relationship, and the operation is performed on the second data in the second storage space according to the second physical page address. Since the zoned storage method only supports sequential read and sequential write, the controllers of a part of memory systems were not designed with the zoned software feature taken into account. For the storage space of these memory systems, part of the data needs to be written in a random writing manner, or part of the data needs to be read in a random reading manner. The second storage space and the second mapping relationship can be used to operate on the second data. The example of the present application stores part of the data that needs to be randomly written or randomly read into the second storage space, and stores the remaining data that can be sequentially written and sequentially read into the first storage space, such that the benefits of zoned storage can be realized with good compatibility with minor changes made to the firmware of the controller.

In a possible example of the first aspect, the second mapping relationship is a mapping relationship comprising the second logical address, a physical block address corresponding to the second logical address, and a second physical page address corresponding to the physical block address. In the above possible example, the second mapping relationship is a mapping relationship comprising the second logical address, a physical block address corresponding to the second logical address, and a second physical page address corresponding to the physical block address. In this way, the second physical page address corresponding to the second logical address may be obtained according to the second logical address and the second mapping relationship, which offers a basis for storing part of the data that needs to be randomly written or randomly read into the second storage space.

In a possible example of the first aspect, the second command is to instruct to write the second data, and the method further comprises: before the obtaining a second physical page address corresponding to the second logical address according to a second mapping relationship and the second logical address, establishing the second mapping relationship corresponding to the second logical address, and the performing the operation on the second data in the second storage space according to the second physical page address comprises: writing the second data at the second physical page address in the second storage space, and the method further comprises: writing the second mapping relationship corresponding to the second logical address into the memory. In the above possible example, the second command is to instruct to write the second data. In the case where the first mapping relationship has not been established, after receiving the first command, the second mapping relationship corresponding to the second logical address is first established, and then the second data is written at the second physical page address in the second storage space. Furthermore, a second mapping relationship corresponding to the second logical address is written into the memory. In this way, a basis for storing part of the data that needs to be randomly written into the second storage space is provided.

In a possible example of the first aspect, the second command is to instruct to read the second data, and the method further comprises: before the obtaining a second physical page address corresponding to the second logical address according to a second mapping relationship, in response to the second command, reading the second mapping relationship corresponding to the second logical address from the memory, and the performing the operation on the second data in the second storage space according to the second physical page address comprises: reading the second data at the second physical address in the second storage space. In the above possible example, the second command is to instruct to read the second data. When receiving the second command, the second mapping relationship corresponding to the second logical address needs to be read from the memory first, and then the second data is read at the second physical address in the second storage space. In this way, a basis for reading part of the data that needs to be randomly read from the second storage space is provided.

In a possible example of the first aspect, the second mapping relationship is a three-level mapping relationship. In the above possible example, the second mapping relationship is a three-level mapping relationship, which provides a basis for storing part of the data that needs to be randomly written or randomly read into the second storage space.

In a possible example of the first aspect, the method further comprises: performing a first garbage collection operation on physical blocks other than blank physical blocks in the second storage space. In the above possible example, the first garbage collection operation is performed on physical blocks other than blank physical blocks in the second storage space, and the first garbage collection operation is retained. The benefits brought by zoned storage is achieved while making minor changes to the firmware of the controller.

In a possible example of the first aspect, the first garbage collection operation is performed when it is detected that the number of the blank physical blocks is less than a first preset value. In the above possible example, the first garbage collection operation is performed on the physical blocks other than blank physical blocks when it is detected that the number of the blank physical blocks in the second storage space is less than the first preset value, so that new blank physical blocks can be freed up as soon as possible for writing data to improve the operational performance of the memory system.

In a possible example of the first aspect, the method further includes: performing a second garbage collection operation on zones other than blank zones in the first storage space. In the above possible example, the second garbage collection operation is performed on zones other than blank zones in the first storage space. In the second garbage collection operation in the second storage space, data is read and written in units of physical pages, and the number of times the read commands and write commands are sent is more. In the second garbage collection operation in the first storage space, data is read and written in units of zones, and the number of times the read commands and write commands are sent is less. Therefore, the second garbage collection operation in the first storage space occupies less space and has less overhead, thereby reducing write amplification of the memory system.

In a possible example of the first aspect, the second garbage collection operation is performed when it is detected that the number of the blank zones is less than a second preset value. In the above possible example, the second garbage collection operation is performed on the zones other than blank zones when it is detected that the number of blank zones in the first storage space is less than the second preset value, so that new blank zones can be freed up as soon as possible for writing data to improve the operational performance of the memory system.

In a possible example of the first aspect, the storage capacity of one of the zones is (1/n) times the storage capacity corresponding to the physical block of the memory of the memory system, and wherein 1<n≤256. In the above possible example, the storage capacity of a zone is (1/n) physical blocks, which facilitates memory system to manage performing of operations on data in each zone.

In a second aspect, it is provided a controller comprising a processor and an interface circuit coupled to the processor and a memory, wherein the processor is configured to: in response to a first command comprising a first logical address of first data on which an operation is to be performed is received, determine at least one zone corresponding to the first logical address, the at least one zone corresponding to a first storage space of the memory; obtain at least one first physical page address corresponding to the at least one zone according to a first mapping relationship and the at least one zone determined; and send a third command to the memory via the interface circuit to perform the operation on the first data in the first storage space according to the at least one first physical page address, wherein a storage capacity of one of the zones is less than a storage capacity corresponding to a physical block of the memory, and the first storage space is a storage space that only supports sequential read and sequential write.

In a possible example of the second aspect, the processor is configured to: determine the at least one first physical page address in a pointer mode based on the first mapping relationship and the at least one zone.

In a possible example of the second aspect, the first command is to instruct to write the first data, and the first command further comprises the first data, and the processor is configured to: send a third command to the memory via the interface circuit to write the first data at the at least one physical address in the first storage space.

In a possible example of the second aspect, the processor is further configured to: before obtaining at least one first physical page address corresponding to the at least one zone, establish the first mapping relationship in which the at least one zone corresponds to a plurality of physical page addresses, the plurality of physical page addresses comprising the at least one first physical page address; and send a first write command to the memory via the interface circuit to write a first mapping relationship in which the at least one zone corresponds to a plurality of physical page addresses into the memory.

In a possible example of the second aspect, the first command is to instruct to read the first data, and the processor is configured to: send a third command to the memory via the interface circuit to read the first data at the at least one first physical page address in the first storage space.

In a possible example of the second aspect, the controller comprises a cache in which the first mapping relationship is stored.

In a possible example of the second aspect, the first mapping relationship is a two-level mapping relationship.

In a possible example of the second aspect, the processor is further configured to: in response to a second command comprising a second logical address of second data on which an operation is to be performed is received, obtain a second physical page address corresponding to the second logical address according to a second mapping relationship, the second logical address corresponding to a second storage space of the memory; and send a fourth command to the memory via the interface circuit according to the second physical page address to perform the operation on the second data in the second storage space, wherein the second storage space is a storage space that can support random read or random write.

In a possible example of the second aspect, the second mapping relationship is a mapping relationship comprising the second logical address, a physical block address corresponding to the second logical address, and a second physical page address corresponding to the physical block address.

In a possible example of the second aspect, the second command is to instruct to write second data, and the processor is further configured to: before obtaining a second physical page address corresponding to the second logical address, establish the second mapping relationship corresponding to the second logical address; and send a second write command to the memory via the interface circuit to write a second mapping relationship corresponding to the second logical address into the memory. The processor is configured to: send a fourth command to the memory via the interface circuit to write the second data at the second physical page address in the second storage space.

In a possible example of the second aspect, the second command is to instruct to read the second data, and the processor is further configured to: before obtaining the second physical page address corresponding to the second logical address according to the second mapping relationship, in response to the second command, send a read command to the memory via the interface circuit to read the second mapping relationship corresponding to the second logical address. The processor is configured to: send a fourth command to the memory via the interface circuit to read the second data at the second physical address in the second storage space.

In a possible example of the second aspect, the second mapping relationship is a three-level mapping relationship.

In a possible example of the second aspect, the processor is further configured to: perform a first garbage collection operation on physical blocks other than blank physical blocks in the second storage space.

In a possible example of the second aspect, the first garbage collection operation is performed when it is detected that the number of the blank physical blocks is less than a first preset value.

In a possible example of the second aspect, the processor is further configured to: perform a second garbage collection operation on zones other than blank zones in the first storage space.

In a possible example of the second aspect, the second garbage collection operation is performed when it is detected that the number of the blank zones is less than a second preset value.

In a possible example of the second aspect, the storage capacity of one of the zones is (1/n) times the storage capacity corresponding to the physical block of the memory, and wherein 1<n≤256.

In a third aspect, it is provided a memory system comprising a controller and a memory coupled to the controller, wherein the controller is configured to: in response to a first command comprising a first logical address of first data on which an operation is to be performed is received, determine at least one zone corresponding to the first logical address, the at least one zone corresponding to a first storage space of the memory; obtain at least one first physical page address corresponding to the at least one zone according to a first mapping relationship and the at least one zone determined; and send a third command to the memory according to the at least one first physical page address; and the memory is configured to: in response to the third command, perform the operation on the first data in the first storage space, wherein a storage capacity of one of the zones is less than a storage capacity corresponding to a physical block of the memory, and the first storage space is a storage space that only supports sequential read and sequential write.

In a possible example of the third aspect, the controller is configured to: determine the at least one first physical page address in a pointer mode based on the first mapping relationship and the at least one zone.

In a possible example of the third aspect, the first command is to instruct to write the first data, and the first command further comprises the first data, and the memory is configured to: in response to the third command, write the first data at the at least one physical address in the first storage space.

In a possible example of the third aspect, the controller is further configured to: before obtaining at least one first physical page address corresponding to the at least one zone, establish the first mapping relationship in which the at least one zone corresponds to a plurality of physical page addresses, the plurality of physical page addresses comprising the at least one first physical page address; and send a first write command to the memory; and the memory is further configured to: in response to the first write command, write the first mapping relationship in which the at least one zone corresponds to the plurality of physical page addresses.

In a possible example of the third aspect, the first command is to instruct to read the first data, and the memory is configured to: in response to the third command, read the first data at the at least one first physical page address in the first storage space; and send the first data to the controller.

In a possible example of the third aspect, the controller comprises a cache in which the first mapping relationship is stored.

In a possible example of the third aspect, the first mapping relationship is a two-level mapping relationship.

In a possible example of the third aspect, the controller is further configured to: in response to a second command comprising a second logical address of second data on which an operation is to be performed is received, obtain a second physical page address corresponding to the second logical address according to a second mapping relationship, the second logical address corresponding to a second storage space of the memory; and send a fourth command to the memory according to the second physical page address; and the memory is configured to: in response to the fourth command, perform the operation on the second data in the second storage space, wherein the second storage space is a storage space that can support random read or random write.

In a possible example of the third aspect, the second mapping relationship is a mapping relationship comprising the second logical address, a physical block address corresponding to the second logical address, and a second physical page address corresponding to the physical block address.

In a possible example of the third aspect, the second command is to instruct to write the second data, and the controller is further configured to: before obtaining a second physical page address corresponding to the second logical address, establish the second mapping relationship corresponding to the second logical address; and send a second write command to the memory; and the memory is configured to: in response to the fourth command, write the second data at the second physical page address in the second storage space; and in response to the second write command, write the second mapping relationship corresponding to the second logical address.

In a possible example of the third aspect, the second command is to instruct to read the second data, and the controller is further configured to: before obtaining the second physical page address corresponding to the second logical address according to the second mapping relationship, in response to the second command, send a read command to the memory; and the memory is further configured to: in response to the read command, read the second mapping relationship corresponding to the second logical address, and send the second mapping relationship to the controller; and in response to the fourth command, read the second data at the second physical address in the second storage space, and send the second data to the controller.

In a possible example of the third aspect, the second mapping relationship is a three-level mapping relationship.

In a possible example of the third aspect, the controller is further configured to: perform a first garbage collection operation on physical blocks other than blank physical blocks in the second storage space.

In a possible example of the third aspect, the first garbage collection operation is performed when it is detected that the number of the blank physical blocks is less than a first preset value.

In a possible example of the third aspect, the controller is further configured to: perform a second garbage collection operation on zones other than blank zones in the first storage space.

In a possible example of the third aspect, the second garbage collection operation is performed when it is detected that the number of the blank zones is less than a second preset value.

In a possible example of the third aspect, the storage capacity of one of the zones is (1/n) times the storage capacity corresponding to the physical block of the memory of the memory system, and wherein 1<n≤256.

In a fourth aspect, it is provided an electronic device comprising a host and the memory system in accordance with the above third aspect or any possible example of the third aspect.

In a fifth aspect, it is provided a computer-readable storage medium storing therein a program code that, when called by a processor, is to perform the above-mentioned method of operating the memory system in accordance with the first aspect or any possible example of the first aspect.

In another aspect of the present application, it is provided a computer program product that, when run on a computer, causes the computer to perform the above-mentioned method of operating the memory system in accordance with the first aspect or any possible example of the first aspect.

It can be understood that any of controller, memory system, electronic device, computer storage medium or computer program product provided above is used to perform the corresponding method provided above. Therefore, the beneficial effects it can achieve can be referred to those of the corresponding methods as provided above and will not be repeated again here.

### BRIEF DESCRIPTION OF THE DRAWINGS

FIG. 1 is a schematic structural diagram of an electronic device according to an example of the present application;
FIG. 2 is a schematic structural diagram of a memory system according to an example of the present application;
FIG. 3 is a schematic structural diagram of a controller according to an example of the present application;
FIG. 4 is a schematic structural diagram of a memory according to an example of the present application;
FIG. 5 is a first schematic diagram of a memory according to an example of the present application;
FIG. 6 is a first schematic flowchart illustrating a method of operating a memory system according to an example of the present application;
FIG. 7 is a second schematic diagram of a memory according to an example of the present application;
FIG. 8 is a schematic diagram of a correspondence between a zone and a physical page address according to an example of the present application;
FIG. 9 is a schematic diagram of a mapping table according to an example of the present application;
FIG. 10 is a first schematic diagram illustrating data writing according to an example of the present application;
FIG. 11 is a schematic diagram illustrating data reading according to an example of the present application;
FIG. 12 is a second schematic flowchart illustrating a method of operating a memory system according to an example of the present application;
FIG. 13 is a third schematic diagram of a memory according to an example of the present application;
FIG. 14 is a second schematic diagram illustrating data writing according to an example of the present application;
FIG. 15 is a schematic diagram illustrating garbage collection according to an example of the present application;
FIG. 16 is a schematic diagram of a controller and a memory according to an example of the present application;
FIG. 17 is a schematic diagram of a memory system and a memory according to an example of the present application; and
FIG. 18 is a schematic diagram of an electronic device according to an example of the present application.

### DETAILED DESCRIPTION

The technical solutions in some examples of the present application will be clearly and thoroughly described below with reference to the accompanying drawings. Obviously, the described examples are only some of the examples of the present application, rather than all the examples. All other examples obtained by those of ordinary skill in the art based on the examples provided in this application fall within the scope of protection of this application.

In the description of this application, the terms "first" and "second" are used for description purposes only and should be understood as indicating or implying relative importance or implicitly indicating the quantity of indicated technical features. Therefore, features defined by "first" and "second" may explicitly or implicitly include one or more of these features. In the description of the examples of the present disclosure, "plurality" means two or more, unless otherwise specified.

When describing some examples, the term "coupled" may be used to indicate that two or more components are in direct physical or electrical contact. However, the term "coupled" may also means two or more components are not in direct contact with each other, but still cooperate or interact with each other. The examples disclosed herein are not limited by the content herein.

"At least one of A, B and C" has the same meaning as "at least one of A, B or C" and includes the following combinations of A, B and C: A only, B only, C only, a combination of A and B, a combination of A and C, a combination of B and C, and a combination of A, B and C. "At least one of A or B" includes the following three combinations: A only, B only, and a combination of A and B. The use of "adapted to" or "configured to" herein implies open and inclusive language that does not exclude devices that are adapted to or configured to perform additional tasks or operations.

Before introducing the examples of the present application, the application scenarios of the examples of the present application are first introduced and explained. The technical solutions provided by the examples of the present application can be applied to electronic devices, or can be applied to components of an electronic device (such as chips built into the electronic device). The electronic devices include but are not limited to: mobile phones, tablets, computers, laptops, camcorders, cameras, wearable devices, vehicle-mounted devices, or terminal devices and other electronic devices.

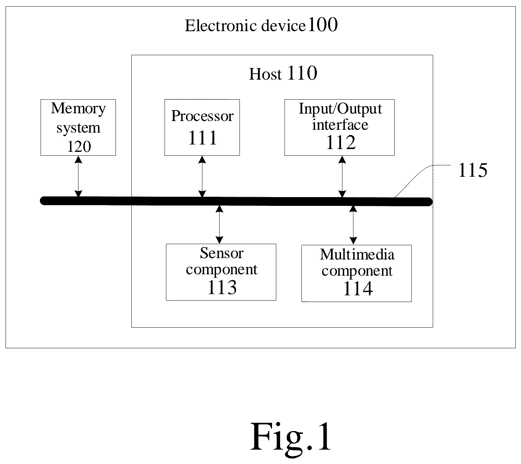

First, a possible structure of an electronic device 100 is introduced with reference to FIG. 1. The electronic device 100 may include: a host 110 and a memory system 120. The host 110 may include: a processor 111, an input/output interface 112, a sensor component 113, and a multimedia component 114, etc. Among them, the memory system 120, the processor 111, the input/output interface 112, the sensor component 113 and the multimedia component 114 can be coupled via a bus 115 respectively.

The memory system 120 can be used to store data, software programs, modules and the like, and mainly includes a program store zone and a data store zone, wherein the program store zone can store software programs, including instructions in form of codes, including but not limited to an operating system, and application programs required for at least one function. The data store zone may store data created according to use of the electronic device 100.

The processor 111 is the control center of the electronic device 100, and is configured to connect various components of the entire device using various interfaces and lines to perform various functions of the electronic device 100 and process the data by running or executing at least one of software programs or software modules stored in the memory system and by calling data stored in the memory system, thereby overall monitoring the electronic device 100. As an example, the processor 111 may include at least one of a central processing unit, a general-purpose processor, a digital signal processor, a neural network processor, a graphics processing unit (GPU), an image signal processor or a microprocessor, and the like.

The input/output interface 112 provides an interface between the processor 111 and peripheral interface modules. For example, the peripheral interface modules may include a keyboard, a mouse, or a Universal Serial Bus (USB) device and the like. The sensor component 113 includes one or more sensors for detecting surrounding images, acceleration/deceleration, orientation, ON/OFF states, relative positioning of components, or temperature changes of the electronic device 100. The multimedia component 114 provides a screen for an output interface between the electronic device 100 and the user.

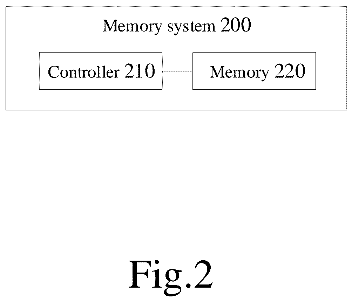

Next, a possible structure of the memory system 200 is introduced with reference to FIG. 2. The memory system 200 may include a memory 220 and a controller 210 that are coupled. The controller 210 may be coupled to a host. The controller 210 may receive an operation command from the host, and send a command (CMD), an address (ADD) and data to the memory 220 according to the operation command. The memory 220 may receive the address sent by the controller 210 and perform operations corresponding to the command on a zone selected according to the address.

The memory 220 may include a floppy disk, a hard disk (such as a built-in hard disk and a removable hard disk), a magnetic disk, an optical disk, a magnetic optical disk such as a compact disc read-only memory (CD_ROM), and a non-volatile memory device such as a random access memory (RAM), a read-only memory (ROM), a programmable read only memory (PROM), an electrical programmable read only memory (EPROM), an electrically erasable programmable read-only memory (EEPROM), a flash memory (such as a NAND flash memory), or any other forms of storage media well known in the technical field.

There may be one or more memories 220. In one example, the controller 210 and a single memory 220 may be integrated into a memory card. The memory card may include a personal computer memory card international association (PCMCIA) card, a compact flash card (CF card), a smart media card (SM card), a memory stick, a multimedia card (MMC), a secure digital card (SD card), a universal flash storage (UFS), etc. Among them, the multimedia card can comprise MMC, reduced-size MMC (RS-MMC), mini MMC (MMCmicro), etc. The secure digital card may include SD, mini SD card (miniSD), micro SD card (microSD), secure digital high capacity (SDHC), etc. The memory card may also include a memory card connector that couples the memory card to the host. In another example, the controller 210 and a plurality of memories 220 may be integrated into a solid state disk (SSD). The SSD may also include an SSD connector that couples the SSD to the host.

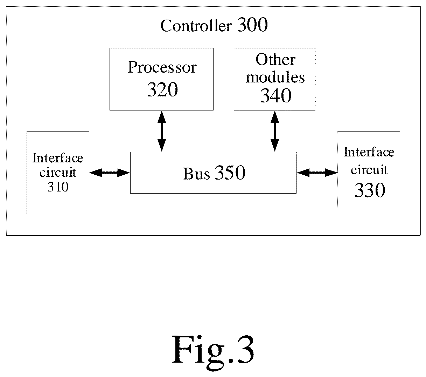

Next, a possible structure of a controller 300 is introduced with reference to FIG. 3. The controller 300 may include: an interface circuit 310, a processor 320, an interface circuit 330, other modules 340, and a bus 350. For example, the bus 350 may be an advanced extensible interface (AXI) bus. Other modules 340 may include write buffers, read buffers and the like implemented by, for example, DRAM and DRAM controllers. The interface circuit 310 in the controller 300 can be coupled to the host as a front-end interface, and the interface circuit 330 can be coupled to the memory as a back-end interface.

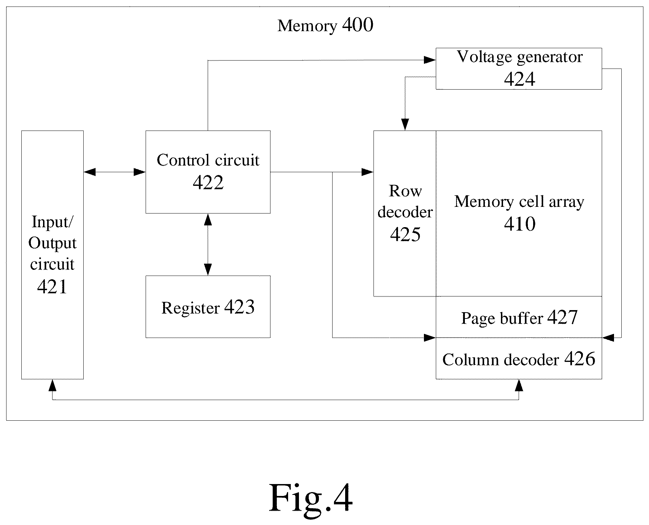

Next, a possible structure of a memory 400 is introduced with reference to FIG. 4. The memory 400 includes a memory cell array 410 and peripheral circuits coupled to the memory cell array 410. The peripheral circuits include an input/output circuit 421, a control circuit 422, a register 423, a voltage generator 424, a row decoder 425, a column decoder 426, a page buffer 427, and the like.

The memory cell array 410 may include multiple memory cells, multiple bit lines (BL), and multiple word lines (WL). Each memory cell is coupled to a word line and a bit line. The input/output circuit 421 may be used to receive read commands and write commands sent by the controller, and send read data to the controller, and so on. The control circuit 422 may be used to control the row decoder 425 to apply the electrical signal generated by the voltage generator 424 to the corresponding word line according to the received commands, and control the column decoder 426 to apply the electrical signal generated by the voltage generator 424 to the corresponding bit lines, thereby performing operations on the corresponding memory cells, such as write operations, read operations, erase operations, etc. The register 423 may be, but is not limited to, used to store a word line address, a string address, etc., and may be used to store current states of the memory 400, such as states of ready and busy. The page buffer 427 may be used to cache data read from the memory cell array 410 or to cache data to be written (programmed) into the memory cell array 410 according to a control signal from the control circuit 422. Without special instructions, the examples of the present application will be introduced by taking the memory in the memory system as a NAND flash memory as an example.

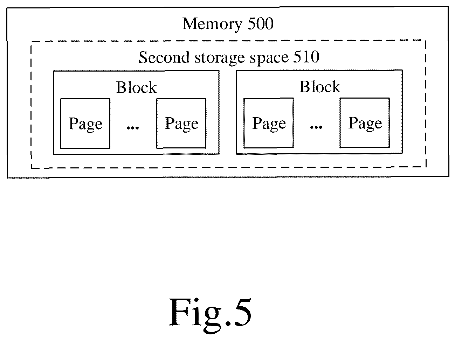

In an example, the memory may be divided into multiple blocks, and each block may be divided into multiple pages. The memory erases data in units of a block, and reads and writes data in units of a page. For example, as shown in FIG. 5, the memory 500 includes a second storage space 510 which includes a plurality of blocks in the memory 500, and each block includes a plurality of pages.

In another example, the memory may be divided into multiple zones. For example, the memory in a zoned universal flash storage (zoned UFS) system is divided into zones, and data with the same use purpose and life cycle is stored in the same zone. Zoned storage in a memory system can make more efficient use of memory. How to implement zoned storage has become an urgent problem to be solved.

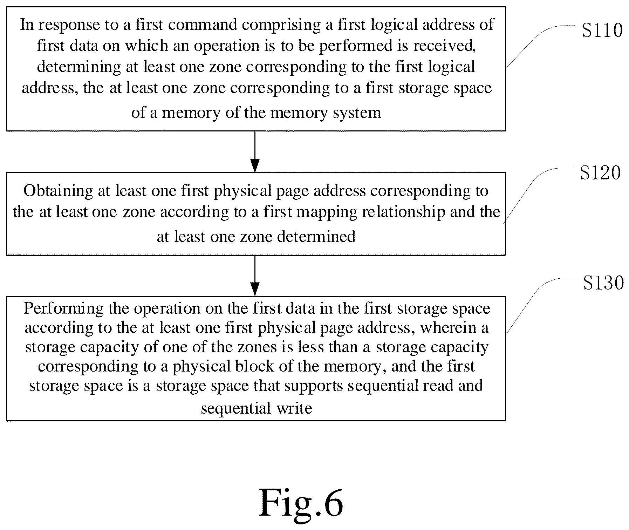

Based on this, in order to implement zoned storage of the memory system, the examples of the present application provide a method of operating the memory system, as shown in FIG. 6.

S110: in response to a first command comprising a first logical address of first data on which an operation is to be performed is received, determining at least one zone corresponding to the first logical address, the at least one zone corresponding to a first storage space of a memory of the memory system.

S120: obtaining at least one first physical page address corresponding to the at least one zone according to a first mapping relationship and the at least one zone determined.

S130: performing the operation on the first data in the first storage space according to the at least one first physical page address, wherein a storage capacity of one of the zones is less than a storage capacity corresponding to a physical block of the memory, and the first storage space is a storage space that supports sequential read and sequential write. In some examples, the first storage space only supports sequential read and sequential write.

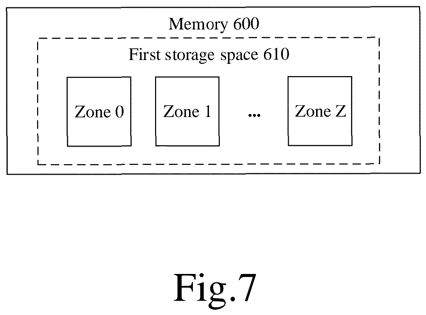

In some examples, the correspondence between the first storage space and the zone may be: the first storage space may include multiple zones. For example, as shown in FIG. 7, the memory 600 includes a first storage space 610, and the first storage space 610 includes multiple zones in the memory 600, such as zone 0, zone 1, ..., and zone Z.

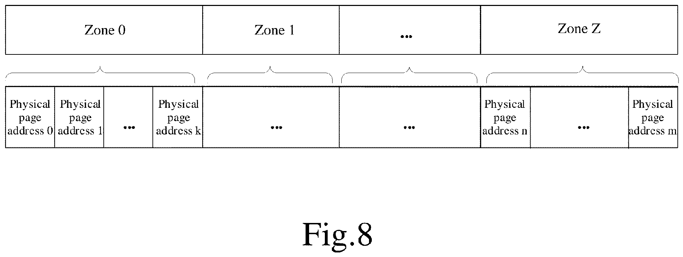

Furthermore, the correspondence between the zone and the physical page address may be: the zone corresponds to multiple physical page addresses, and the number of physical page addresses corresponding to each zone may be the same or different. For example, as shown in FIG. 8, zone 0 corresponds to physical page addresses 0, 1, ..., k, and zone Z corresponds to physical page addresses n, ..., m.

In addition, the first physical page address may refer to the physical page address indicated by the first logical address. The correspondence among the first logical address, the zone and the first physical page address may be: the first logical address corresponds to at least one zone, and the at least one zone corresponding to the first logical address corresponds to at least one first physical page address. If the first logical address corresponds to a zone, the zone corresponding to the first logical address corresponds to at least one first physical page address. If the first logical address corresponds to multiple zones, each of the multiple zones corresponding to the first logical address corresponds to at least one first physical page address.

In the method of operating the memory system provided by the example of the present application, the first storage space of the memory of the memory system is divided into multiple zones, and the first storage space is a storage space that only supports sequential read and sequential write. When receiving the first command to operate on the first data, at least one zone may be determined according to the first logical address of the first data included in the first command. According to the first mapping relationship between the at least one zone and multiple physical page addresses (the multiple physical page addresses include at least one first physical page address), the at least one first physical page address corresponding to the at least one zone can be obtained. If the first logical address corresponds to a zone, at least one first physical page address corresponding to the zone is obtained. If the first logical address corresponds to multiple zones, at least one first physical page address corresponding to each of the multiple zones is obtained. The operation indicated by the first command can be performed on the first data in the first storage space according to the obtained at least one first physical page address. In this way, by determining the zone according to the first logical address, and then obtaining the first physical page address according to the first mapping relationship, zoned storage of the memory system can be implemented, and thus the benefits brought by zoned storage can be realized, which include but are not limited to:
1. Host performance booster (HPB) technology and file-based optimization (FBO) technology can avoid the decrease in reading speed after long-term use of the memory. The functional benefits of zoned storage can replace the functional benefits of HPB technology and FBO technology, and are even more than the functional benefits that HPB technology and FBO technology can achieve.
2. Multiple hot and cold data division can be realized.
3. The host can place data with similar access frequencies in the same zone and data with different access frequencies in different zones to reduce overall write amplification and thereby extend memory life, which is suitable for devices of quad level cell (QLC), devices of penta level cell (PLC) and devices of more level cell.

In a possible example, the storage capacity of one of the zones is (1/n) times the storage capacity corresponding to the physical block of the memory of the memory system, and wherein 1<n≤256.

In the method of operating the memory system provided by the example of the present application, the storage capacity of one zone is (1/n) physical blocks, which facilitates the memory system to manage performing of operations on data in each zone.

In a possible example, the first mapping relationship may be a two-level mapping relationship. The first mapping relationship may only include a mapping relationship between the zone and the physical page address. The mapping relationship may be stored in the form of a mapping table. The first mapping relationship may include a first-level A mapping table and a second-level A mapping table. The first-level A mapping table and the second-level A mapping table may be stored in a system block of the memory. The mapping relationship can also be stored in other forms, and the examples of this application do not limit this.

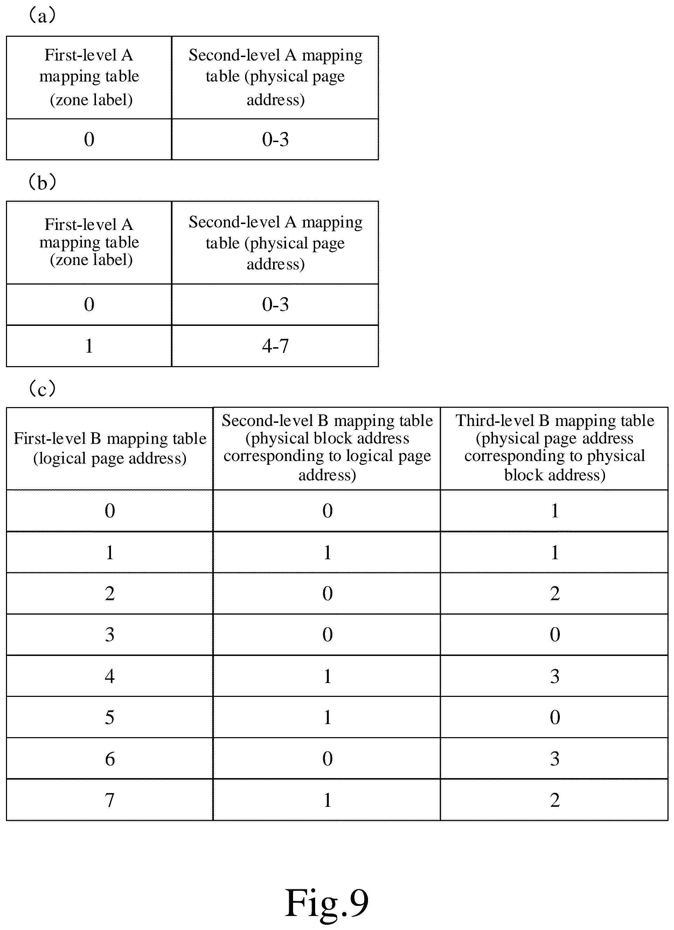

In an example, the first-level A mapping table stores a physical address in the system block indicating the second-level A mapping table corresponding to a zone, and the second-level A mapping table corresponding to the zone stores multiple physical page addresses corresponding to the zone. The plurality of physical page addresses stored in the second-level A mapping table may include at least one first physical page address indicated by the first logical address. For example, referring to (a) in FIG. 9, the first-level A mapping table stores the physical address of the second-level A mapping table corresponding to zone 0 (zone label 0) in the system block. The second-level A mapping table corresponding to zone 0 stores four physical page addresses corresponding to zone 0, including physical page addresses 0, 1, 2, and 3. The at least one first physical page address indicated by the first logical address may be physical page addresses 0 and 1.

In another example, the first-level A mapping table stores physical addresses in the system block indicating multiple second-level A mapping tables corresponding to multiple zones respectively, and the second-level A mapping tables corresponding to each of the multiple zones stores multiple physical page addresses corresponding to this zone. The plurality of physical page addresses stored in the plurality of second-level A mapping tables include at least one first physical page address indicated by the first logical address. For example, referring to (b) in FIG. 9, the first-level A mapping table stores the physical address of the second-level A mapping table corresponding to zone 0 in the system block, and stores the physical address of the second-level A mapping table corresponding to zone 1 (zone label 1) in the system block. The second-level A mapping table corresponding to zone 0 stores four physical page addresses corresponding to zone 0, including physical page addresses 0, 1, 2, and 3. The second-level A mapping table corresponding to zone 1 stores four physical page addresses corresponding to zone 1, including physical page addresses 4, 5, 6, and 7. The at least one first physical page address indicated by the first logical address may be physical page addresses 0 to 7.

In yet another example, compared to a three-level mapping relationship or a more-level mapping relationship, the two-level mapping relationship occupies less storage space. For example, referring to (c) in FIG. 9, descriptions are given by way of an example in which the three-level mapping relationship is a logical address to physical address (logical to physical, L2P) mapping table. The three-level mapping table may include: a mapping relationship among a logical page address, a physical block address corresponding to the logical page address, and a physical page address corresponding to the physical block address. The three-level mapping relationship is stored in the form of a three-level mapping table, which includes a first-level B mapping table, a second-level B mapping table, and a third-level B mapping table. The first-level B mapping table stores the physical address of the second-level B mapping table corresponding to logical page address 0 in the system block. It can be known from the second-level B mapping table corresponding to a logical page address 0 that the logical page address 0 corresponds to a physical block address 0, and the second-level B mapping table corresponding to the logical page address 0 stores the physical address of the third-level B mapping table corresponding to the physical block address 0 in the system block. The third-level B mapping table corresponding to the physical block address 0 stores a physical page address 1 corresponding to the physical block address 0. In this way, the three-level mapping table can store the mapping relationship between the logical page addresses 0, 2, 3, and 6 and the physical page addresses 0, 1, 2, and 3 corresponding to the physical block address 0, and can store the mapping relationship between the logical page addresses 1, 4, 5, and 7 and the second physical page address 0, 1, 2, and 3 corresponding to the physical block address 1.

As can be seen from the above example, for the mapping relationship of 8 physical page addresses, the two-level mapping relationship shown in (b) in FIG. 9 occupies less storage space than the three-level mapping relationship shown in (c) in FIG. 9. For example, for a 256 GB UFS memory system, the storage capacity of one zone may be 16 MB, and the maximum storage space occupied by the two-level mapping relationship is 64 KB.

In the method of operating the memory system provided by the example of the present application, the first mapping relationship is a two-level mapping relationship. Compared with the three-level mapping relationship or more-level mapping relationship, the two-level mapping relationship occupies less storage space, which can save the storage capacity of the memory system.

In another possible example, the first mapping relationship may also be a three-level mapping relationship or a more-level mapping relationship, which is not limited in the example of the present application.

In another possible example, the controller of the memory system includes a cache, and the first mapping relationship may be stored in the cache.

In an example, the register may be a static random-access memory (SRAM). For memory systems that do not have dynamic random access memory (DRAM) and only have SRAM in the controller, the amount of data that the controller can cache is smaller. Since the first mapping relationship occupies a smaller storage space, the first mapping relationship can be stored in the cache of the controller.

In another example, the buffer may be a DRAM. Since DRAM can cache a larger amount of data, the first mapping relationship may be stored in the DRAM even if the first mapping relationship occupies a larger storage space.

In the method of operating the memory system provided by the example of the present application, the cache in the controller can store the first mapping relationship. When the controller needs to obtain the first mapping relationship, it does not need to obtain the first mapping relationship from the memory 220 every time, but can directly obtain the first mapping relationship from the cache. The speed of obtaining the first mapping relationship by the controller is faster and and the controller can operate on the data more efficiently.

After introducing the form and storage location of the first mapping relationship, the method of obtaining the first physical page address according to the first logical address is illustrated as an example.

In a possible example, S110 (determining at least one zone corresponding to the first logical address) may include: calculating the first logical address according to a preset algorithm to determine at least one zone corresponding to the first logical address. The preset algorithm may be an algorithm preconfigured by the memory system for determining the relationship between the first logical address and the zone.

For example, the first logical address carries a calculation data, a division calculation is performed on the calculation data carried by the first logical address, and the obtained quotient is used to indicate a zone (zone 0 in FIG. 9).

As an example, the first logical address carries multiple calculation data, and division calculations are performed on the multiple calculation data carried by the first logical address respectively, and the obtained multiple quotients are used to indicate multiple zones (the zone 0 and zone 1 in FIG. 9) respectively, wherein each of the multiple quotients is used to indicate a zone.

In another possible example, S120 (obtaining at least one first physical page address corresponding to at least one zone according to the first mapping relationship and the at least one zone determined) may include: determining the at least one first physical page address in a pointer mode based on the first mapping relationship and the at least one zone. In some examples, S120 may include S121 to S123.

S121: calculating the first logical address according to a preset algorithm to determine a pointer corresponding to the first logical address.

S122: obtaining multiple physical page addresses corresponding to the at least one zone according to the first mapping relationship and the at least one zone corresponding to the first logical address. If the first logical address corresponds to a zone, multiple physical page addresses corresponding to this zone are obtained. If the first logical address corresponds to multiple zones, multiple physical page addresses corresponding to each of the multiple zones are obtained.

S123: determining at least one first physical page address of the multiple physical page addresses according to the pointer corresponding to the first logical address. If the first logical address corresponds to a zone, at least one first physical page address of the multiple physical page addresses corresponding to this zone is determined. If the first logical address corresponds to multiple zones, at least one first physical page address of the multiple physical page addresses corresponding each of the multiple zones is determined.

For example, the first logical address carries a calculation data, a division calculation is performed on the calculation data carried by the first logical address, and the obtained quotient is used to indicate a zone (zone 0 in FIG. 9), and the obtained remainder is used to indicate a pointer corresponding to the first logical address. This pointer can be used to indicate the sequence number of the first physical page address among the multiple physical page addresses corresponding to the zone (for example, the second physical page address in physical page addresses 0-3 in FIG. 9, that is, physical page address 1).

As an example, the first logical address carries multiple calculation data, and the above-mentioned division calculation is performed on each of the multiple calculation data, and the obtained multiple remainders are used to indicate multiple pointers corresponding to the first logical address, thereby determining at least one first physical page address corresponding to at least one zone.

In the method of operating the memory system provided by the example of the present application, multiple physical page addresses corresponding to each of the at least one zone can be obtained based on the first mapping relationship and the at least one zone. In the pointer mode, at least one first physical page address can be determined from multiple physical page addresses corresponding to each zone. In this way, a basis for implementing zoned storage of the memory system can be provided.

Next, the operations performed on the first data indicated by the first command is introduced in several possible examples.

In some examples, the first command is to instruct to write the first data, and the first command also includes the first data. S130 (performing the operation on the first data in the first storage space according to the at least one first physical page address) may include: writing the first data at the at least one physical address in the first storage space.

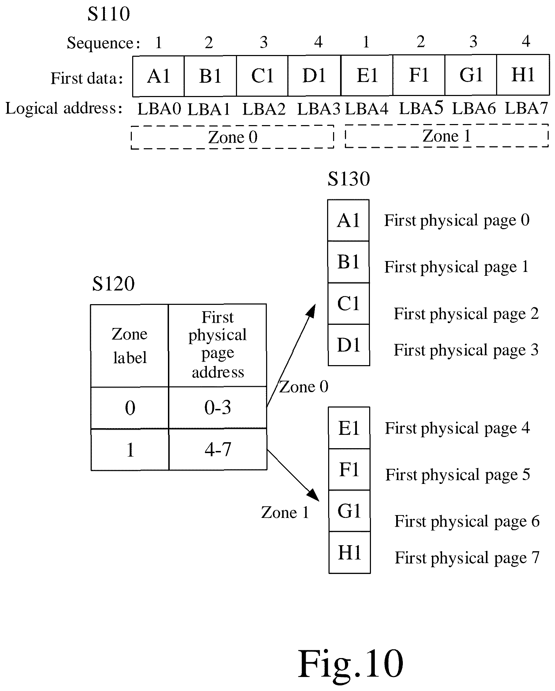

For example, referring to FIG. 10, the first data includes eight pieces of data, which may include A1, B1, C1, D1, E1, F1, G1, and H1 in sequence, and their corresponding first logical addresses are logical block addresses (LBA) 0 to LBA7 respectively. In response to the first command, the memory system determines that the zone corresponding to the first logical addresses of the four pieces of data A1, B1, C1, and D1 is zone 0, and the zone corresponding to the first logical addresses of the four pieces of data E1, F1, G1, and H1 is zone 1. The first mapping relationship corresponding to zone 0 and zone 1 has been stored in the system block of the memory of the memory system, and is written into the cache of the controller when the memory system is started. The memory system obtains the first physical page addresses 0-3 corresponding to zone 0 and the first physical page addresses 4-7 corresponding to zone 1 according to the first mapping relationship stored in the cache.

In the order of A1, B1, C1, and D1, the memory system writes A1 into the first physical page 0 indicated by the first physical page address 0, writes B1 into the first physical page 1 indicated by the first physical page address 1, writes C1 into the first physical page 2 indicated by the first physical page address 2, and writes D1 into the first physical page 3 indicated by the first physical page address 3. Moreover, in the order of E1 as the 1^{st}, F1 as the 2^{nd}, G1 as the 3^{rd}, and H1 as the 4^{th}, the memory system writes E1 into the first physical page 4 indicated by the first physical page address 4, writes F1 into the first physical page 5 indicated by the first physical page address 5, writes G1 into the first physical page 6 indicated by the first physical page address 6, and writes H1 into the first physical page 7 indicated by the first physical page address 7.

In the method of operating the memory system provided by the example of the present application, the first command is to instruct to write the first data. For the case where the first mapping relationship has been established, at least one first physical page address can be obtained directly according to the first mapping relationship, and the first data is written at the at least one physical address in the first storage space. In this way, not only a basis for implementing zoned storage of the memory system is provided, but also the data writing operation is implemented in a simple and convenient manner, with shorter writing time and faster writing speed.

In some examples, the first command is to instruct to write the first data, and the first command also includes the first data. Before S120 (obtaining at least one first physical page address corresponding to the at least one zone according to a first mapping relationship and the at least one zone determined), the method further includes: establishing the first mapping relationship in which the at least one zone corresponds to a plurality of physical page addresses, the plurality of physical page addresses comprising the at least one first physical page address. S130 (performing the operation on the first data in the first storage space according to the at least one first physical page address) may include: writing the first data at the at least one physical address in the first storage space. The method further includes: writing the first mapping relationship in which the at least one zone corresponds to the plurality of physical page addresses into the memory.

Establishing the first mapping relationship in which the at least one zone corresponds to a plurality of physical page addresses includes: if the first logical address corresponds to a zone, establishing the first mapping relationship in which the zone corresponds to multiple physical page addresses; and if the first logical address corresponds to multiple zones, establishing the first mapping relationship in which each of the multiple zones corresponds to multiple physical page addresses.

When the memory system determines at least one zone corresponding to the first logical address, the first mapping relationship of the at least one zone has not yet been established. The first mapping relationship needs to be established first before the first physical page address can be obtained according to the first mapping relationship. After the first mapping relationship is established, the first mapping relationship is written into the memory, and the first mapping relationship is stored in the cache of the controller.

In the method of operating the memory system provided by the example of the present application, the first command is to instruct to write the first data. For the case where the first mapping relationship has not been established, after receiving the first command, a first mapping relationship in which at least one zone corresponds to a plurality of physical page addresses is first established, the plurality of physical page addresses including at least one first physical page address, and then the first data is written at the at least one physical address in the first storage space. Furthermore, a first mapping relationship in which at least one zone corresponds to multiple physical page addresses is written into the memory. In this way, not only a basis for implementing zoned storage of the memory system is provided, but also subsequent use of the first mapping relationship is facilitated. For the first storage space, the first mapping relationship needs to be established once each time a zone of data is written, instead of established once each time a logical page of data is written. At the overall level of data writing, the number of times to establish the first mapping relationship is less, the number times of instruction interactions is less, and the writing speed is faster.

In some examples, the first command is to instruct to read the first data. S130 (performing the operation on the first data in the first storage space according to the at least one first physical page address) may include: reading the first data at the at least one first physical page address in the first storage space.

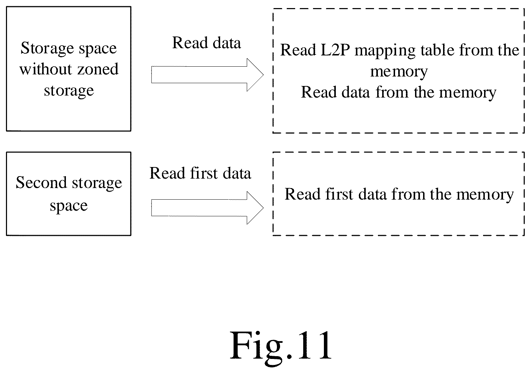

For example, referring to FIG. 11, an L2P mapping table (such as the above-mentioned three-level mapping table) may be used for the storage space that does not use zoned storage to record the mapping relationship between the logical page address and the physical page address. The L2P mapping table occupies a larger storage space. In some examples, the cache in the controller of the memory system has a smaller capacity (for example, in the case where SRAM is used as the cache), and the L2P mapping table is stored in the memory of the memory system instead of being entirely cached in the controller of the memory system. In some other examples, the cache in the controller of the memory system has a larger capacity (for example, in the case where DRAM is used as the cache), the L2P mapping table is stored in the memory, and the L2P mapping table in the memory can be loaded into the cache of the controller when the memory system is powered on. When the memory system reads data, it needs to first read the L2P mapping table corresponding to the data from the memory or cache, then obtain the physical page address of the data according to the second mapping relationship, and read data from the memory according to the physical page address of the data.

In the method of operating the memory system provided by the example of the present application, since the first mapping relationship occupies a smaller storage space, the first mapping relationship can be cached in the controller regardless of whether the cache capacity in the controller of the memory system is larger or smaller. Before the memory system reads the first data, there is no need to perform the operation of reading the first mapping relationship from the memory. The first data can be directly read from the memory according to the first mapping relationship cached in the controller.

In the method of operating the memory system provided by the example of the present application, the first command is to instruct to read the first data, and the first mapping relationship has been established. When the first command is received, at least one first physical page address can be obtained directly according to the first mapping relationship so as to read the first data at the at least one first physical page address in the first storage space. In this way, not only the basis for implementing zoned storage of the memory system is provided, but also the data reading operation is implemented in a simple and convenient manner, with shorter reading time and faster reading speed.

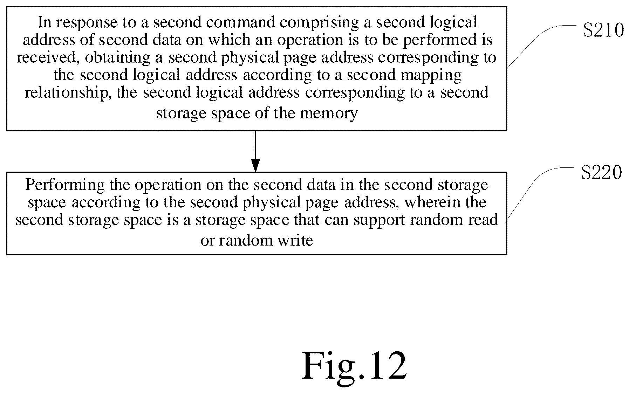

In addition to the first storage space, the memory system provided by the example of the present application may include a second storage space. Referring to FIG. 12, this method may further include:

S210: in response to a second command comprising a second logical address of second data on which an operation is to be performed is received, obtaining a second physical page address corresponding to the second logical address according to a second mapping relationship, the second logical address corresponding to a second storage space of the memory.

S220: performing the operation on the second data in the second storage space according to the second physical page address, wherein the second storage space is a storage space that can support random read or random write.

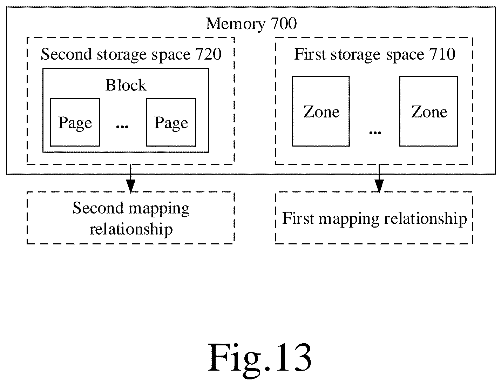

The correspondence between the second storage space and the blocks and pages may be: the second storage space includes multiple blocks, and each block includes multiple pages. The second storage space is logically divided into pages. Therefore, data may be read from or written into the second storage space in a random manner. As can be seen from the above examples, the first storage space includes multiple zones. The first storage space is no longer logically divided into pages. Therefore, data may be read from or written into the first storage space in a sequential manner. For example, as shown in FIG. 13, the memory 700 includes a first storage space 710 and a second storage space 720. The first storage space 710 includes a plurality of zones, the second storage space 720 includes a plurality of blocks, and each block includes a plurality of pages. The flash translation layer (FTL) corresponding to the first storage space uses the first mapping relationship to perform address translation, and the flash translation layer corresponding to the second storage space uses the second mapping relationship to perform address translation.

For example, the first command received by the memory system carries a first logical unit number (LUN), which is used to determine whether to perform an operation on the first data in the first storage space. The second command received by the memory system carries a second logical unit number (LUN), which is used to determine whether to perform an operation on the second data in the second storage space.

In the method of operating the memory system provided by the example of the present application, the first storage space is a storage space that only supports sequential read and sequential write, and the second storage space is a storage space that can support random read or random write. For the first data that can be sequentially written or sequentially read, at least one first physical page address corresponding to the first logical address of the first data is obtained according to the first command and the first mapping relationship, and the operation is performed on the first data in the first storage space according to the at least one physical page address. For the second data that needs to be randomly written or randomly read, the second physical page address corresponding to the second logical address of the second data is obtained according to the second command and the second mapping relationship, and the operation is performed on the second data in the second storage space according to the second physical page address. Since the zoned storage method only supports sequential read and sequential write, the controllers of a part of memory systems were not designed with the zoned software feature taken into account. For the storage space of these memory systems, part of the data needs to be written in a random writing manner, or part of the data needs to be read in a random reading manner. The second storage space and the second mapping relationship can be used to operate on the second data. The example of the present application stores part of the data that needs to be randomly written or randomly read into the second storage space, and stores the remaining data that can be sequentially written and sequentially read into the first storage space, such that the benefits of zoned storage can be realized with good compatibility with minor changes made to the firmware of the controller. For memory system products that do not support the Zoned UFS protocol, or have poor hardware performance, the method of operating the memory system of the examples of the present disclosure can also be applied with minor updates to the firmware of the controller.

In a possible example, the second mapping relationship is a mapping relationship comprising the second logical address, a physical block address corresponding to the second logical address, and a second physical page address corresponding to the physical block address.

The correspondence among the logical page address, the physical block address and the physical page address may be: multiple logical page addresses correspond to one physical block address, the physical block address corresponds to multiple physical page addresses, and one logical page address corresponds to one physical page address in the physical block address.

Furthermore, the content of the second mapping relationship can be referred to (c) in FIG. 9. The second mapping relationship includes a mapping relationship among multiple logical page addresses, at least one physical block address, and multiple physical page addresses. The second logical address may be at least one logical page address of the plurality of logical page addresses, such as logical page address 0. The physical block address corresponding to the second logical address may be the physical block address 0 corresponding to the logical page address 0, and the second physical page address corresponding to physical block address 0 may be physical page address 1.

In the method of operating the memory system provided by the example of the present application, the second mapping relationship is a mapping relationship comprising the second logical address, a physical block address corresponding to the second logical address, and a second physical page address corresponding to the physical block address. In this way, the second physical page address corresponding to the second logical address may be obtained according to the second logical address and the second mapping relationship, which offers a basis for storing part of the data that needs to be randomly written or randomly read into the second storage space.

In a possible example, the second mapping relationship is a three-level mapping relationship. The second mapping relationship may be stored in the form of a three-level mapping table, and the second mapping relationship may include a first-level B mapping table, a second-level B mapping table, and a third-level B mapping table. The first-level B mapping table stores the physical address of the second-level B mapping table corresponding to the second logical address. The second-level B mapping table stores the physical address of the corresponding third-level B mapping table. The third level B mapping table stores the second physical page address corresponding to the physical block address corresponding to the second logical address.

In the method of operating the memory system provided by the example of the present application, the second mapping relationship is a three-level mapping relationship, which offers a basis for storing part of the data that needs to be randomly written or randomly read into the second storage space.

Next, the operations performed on the second data indicated by the second command is introduced in several possible examples.

In the first example, the second command is to instruct to write second data. Before S210 (obtaining a second physical page address corresponding to the second logical address according to a second mapping relationship), the method may further include: in response to the second command, reading the second mapping relationship corresponding to the second logical address from the memory. S220 (performing the operation on the second data in the second storage space according to the second physical page address) may include: writing the second data at the second physical address in the second storage space.

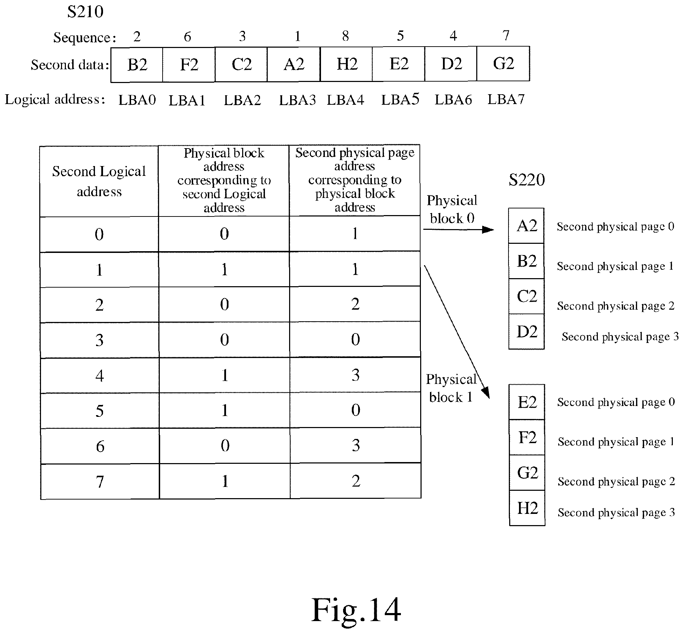

For example, referring to FIG. 14, the second data includes eight pieces of data, which can be A2, B2, C2, D2, E2, F2, G2, and H2 in the order of 1 to 7, and their corresponding second logical addresses are LBA3, LBA0, LBA2, LBA6, LBA5, LBA1, LBA7, and LBA4 respectively. The second mapping relationship where the second logical addresses of the eight pieces of data are located has been stored in the system block of the memory of the memory system. In response to the second command, the memory system reads the second mapping relationship corresponding to the second logical address from the memory. The memory system determines, according to the read second mapping relationship, that: the physical block address corresponding to the second logical addresses of the four pieces of data B2, C2, A2, and D2 is 0; the physical block address corresponding to the second logical addresses of the four pieces of data F2, H2, E2, and G2 is 1; the second physical page address corresponding to the physical block address 0 of B2 is 1; the second physical page address corresponding to the physical block address 1 of F2 is 1; the second physical page address corresponding to the physical block address 0 of C2 is 2; the second physical page address corresponding to the physical block address 0 of A2 is 0; and the second physical page address corresponding to the physical block address 1 of H2 is 3, the second physical page address corresponding to the physical block address 1 of E2 is 0, the second physical page address corresponding to the physical block address 0 of D2 is 3, and the second physical page address corresponding to the physical block address 1 of G2 is 2.

In the order of B2 being the 1^{st}, F2 being the 2^{nd}, C2 being the 3^{rd}, A2 being the 4^{th}, H2 being the 5^{th}, E2 being the 6^{th}, D2 being the 7^{th}, and G2 being the 8^{th}, the memory system writes B2 into the second physical page 1 of the physical block 0 indicated by the block address 0 and the second physical page address 1, writes F2 into the second physical page 1 of the physical block 1 indicated by the physical block address 1 and the second physical page address 1, writes C2 into the second physical page 2 of the physical block 0 indicated by the physical block address 0 and the second physical page address 2, writes A2 into the second physical page 0 of the physical block 0 indicated by the physical block address 0 and the second physical page address 0, writes H2 into the second physical page 3 of physical block 1 indicated by physical block address 1 and second physical page address 3, writes E2 into the second physical page 0 of physical block 1 indicated by physical block address 1 and second physical page address 0, writes D2 into the second physical page 3 of the physical block 0 indicated by the physical block address 0 and the second physical page address 3, and writes G2 into the second physical page 2 of physical block 1 indicated by the physical block address 1 and the second physical page address 2. It can be seen that the writing order of the second data is inconsistent with the actual order of the second data, and the second data is written randomly.

In the second example, the second command is to instruct to write second data. The method may further include, before S210 (obtaining a second physical page address corresponding to the second logical address according to a second mapping relationship and the second logical address): establishing the second mapping relationship corresponding to the second logical address. S220 (performing the operation on the second data in the second storage space according to the second physical page address) may include: writing the second data at the second physical page address in the second storage space. The method further includes: writing the second mapping relationship corresponding to the second logical address into the memory.

When the memory system receives the second command, the second mapping relationship corresponding to the second logical address has not yet been established. The second mapping relationship needs to be established first before the physical block address corresponding to the second logical address can be obtained according to the second mapping relationship, and then the second physical page address corresponding to the physical block address can be obtained. After the second mapping relationship is established, the second mapping relationship is written into the memory. In an example, since the second mapping relationship is at least a three-level mapping relationship and occupies a larger storage space, the second mapping relationship is not stored in the cache of the controller. For the second storage space, each time a logical page of data is written, a second mapping relationship needs to be established once.

In the method of operating the memory system provided by the example of the present application, the second command is to instruct to write the second data. In the case where the first mapping relationship has not been established, after receiving the first command, the second mapping relationship corresponding to the second logical address is first established, and then the second data is written at the second physical page address in the second storage space. Furthermore, a second mapping relationship corresponding to the second logical address is written into the memory. In this way, a basis for storing part of the data that needs to be randomly written into the second storage space is provided.

In the third example, the second command is to instruct to read the second data. The method may further include, before S210 (obtaining a second physical page address corresponding to the second logical address according to a second mapping relationship): in response to the second command, reading the second mapping relationship corresponding to the second logical address from the memory. S220 (performing the operation on the second data in the second storage space according to the second physical page address) may include: reading the second data at the second physical address in the second storage space.

For example, referring to FIG. 11, since the second mapping relationship occupies a larger storage space, the second mapping relationship is stored in the memory of the memory system instead of being cached entirely in the controller of the memory system. When the memory system receives the second command, it needs to first read the second mapping relationship, and then read the second data according to the second physical page address indicated by the second mapping relationship.

In the method of operating the memory system provided by the example of the present application, the second command is to instruct to read the second data. When receiving the second command, the second mapping relationship corresponding to the second logical address needs to be read from the memory first, and then the second data is read at the second physical address in the second storage space. In this way, a basis for reading part of the data that needs to be randomly read from the second storage space is provided.

Next, the garbage collection method of the memory system provided by the example of this application is introduced.

In a possible example, the method further includes: performing a first garbage collection operation on physical blocks other than blank physical blocks in the second storage space.

The blank physical blocks may be available physical blocks that do not store data. The first garbage collection operation includes: when other physical blocks comprise multiple physical blocks, reading the data of each physical page in the multiple physical blocks, writing the read data into the physical page of any physical block in the blank physical blocks, and erasing the data of each physical block.

Furthermore, when writing data, if the number of blank physical blocks is insufficient to write the data, the memory system performs a first garbage collection operation on other physical blocks in the second storage space except the blank physical blocks.

In the method of operating the memory system provided by the example of the present application, the first garbage collection operation is performed on physical blocks other than blank physical blocks in the second storage space, and the first garbage collection operation is retained. The benefits brought by zoned storage is achieved while making minor changes to the firmware of the controller.

In another possible example, the first garbage collection operation is performed when it is detected that the number of the blank physical blocks is less than a first preset value. When the memory system is in an idle state, the memory system can proactively detect the number of blank physical blocks, and when it is detected that the number of blank physical blocks is less than the first preset value, perform the first garbage collection operation on the physical blocks in the second storage space other than blank physical blocks.

In the method of operating the memory system provided by the example of the present application, the first garbage collection operation is performed on the physical blocks other than blank physical blocks when it is detected that the number of the blank physical blocks in the second storage space is less than the first preset value, so that new blank physical blocks can be freed up as soon as possible for writing data to improve the operational performance of the memory system.

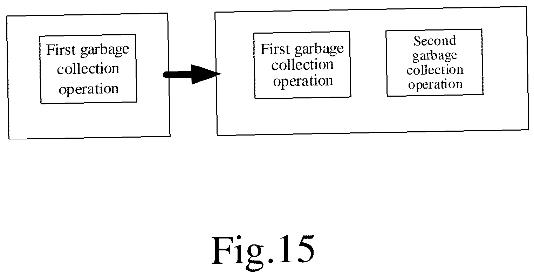

In yet another possible example, referring to FIG. 15, based on the first garbage collection operation, the method further includes: performing a second garbage collection operation on zones other than blank zones in the first storage space

The blank zones may be available zones where no data is stored. The second garbage collection operation includes: when other zones comprise multiple zones, reading the data of each of the multiple zones, writing the read data into any zone of the blank zones, and erasing the data of each zone.

Furthermore, when writing data, if the number of blank physical blocks is insufficient to write the data, the memory system performs a second garbage collection operation on physical blocks other than blank physical blocks in the second storage space.

In the method of operating the memory system provided by the example of the present application, the second garbage collection operation is performed on zones other than blank zones in the first storage space. In the second garbage collection operation in the second storage space, data is read and written in units of physical pages, and the number of times the read commands and write commands are sent is more. In the second garbage collection operation in the first storage space, data is read and written in units of zones, and the number of times the read commands and write commands are sent is less. Therefore, the second garbage collection operation in the first storage space occupies less space and has less overhead, thereby reducing write amplification of the memory system.

In yet another possible example, the second garbage collection operation is performed when it is detected that the number of the blank zones is less than a second preset value. When the memory system is in an idle state, the memory system can proactively detect the number of blank zones, and when it is detected that the number of blank zones is less than the second preset value, a second garbage collection operation is performed on zones other than blank zones in the first storage space.

In the method of operating the memory system provided by the example of the present application, when it is detected that the number of blank zones in the first storage space is less than the second preset value, the second garbage collection operation is performed on zones other than blank zones, so that new blank zones can be freed up as soon as possible for writing data to improve the operational performance of the memory system.

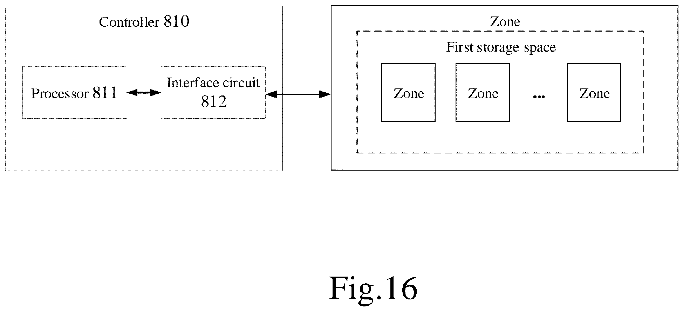

The example of the present application also provides a controller. Referring to FIG. 16, the controller 810 includes a processor 811 and an interface circuit 812 coupled to the processor 811. The interface circuit 812 is coupled to a memory 820. The processor 811 is configured to: in response to a first command comprising a first logical address of first data on which an operation is to be performed is received, determine at least one zone corresponding to the first logical address, the at least one zone corresponding to a first storage space of the memory 820; obtain at least one first physical page address corresponding to the at least one zone according to a first mapping relationship and the at least one zone determined; and send a third command to the memory 820 via the interface circuit 812 to perform the operation on the first data in the first storage space according to the at least one first physical page address, wherein a storage capacity of one of the zones is less than a storage capacity corresponding to a physical block of the memory 820, and the first storage space is a storage space that only supports sequential read and sequential write.

In a possible example, the processor 811 is configured to: determine the at least one first physical page address in a pointer mode based on the first mapping relationship and the at least one zone.

In a possible example, the first command is to instruct to write the first data, and the first command further comprises the first data, and the processor 811 is configured to: send a third command to the memory 820 via the interface circuit 812 to write the first data at the at least one physical address in the first storage space.

In a possible example, the processor 811 is further configured to: before obtaining at least one first physical page address corresponding to the at least one zone, establish the first mapping relationship in which the at least one zone corresponds to a plurality of physical page addresses, the plurality of physical page addresses comprising the at least one first physical page address; and send a first write command to the memory 820 via the interface circuit 812 to write a first mapping relationship in which the at least one zone corresponds to a plurality of physical page addresses into the memory 820.

In a possible example, the first command is to instruct to read the first data, and the processor 811 is configured to: send a third command to the memory 820 via the interface circuit 812 to read the first data at the at least one first physical page address in the first storage space.

In a possible example, the controller 810 comprises a cache in which the first mapping relationship is stored.

In a possible example, the first mapping relationship is a two-level mapping relationship.

In a possible example, the processor 811 is further configured to: in response to a second command comprising a second logical address of second data on which an operation is to be performed is received, obtain a second physical page address corresponding to the second logical address according to a second mapping relationship, the second logical address corresponding to a second storage space of the memory 820; and send a fourth command to the memory 820 via the interface circuit 812 according to the second physical page address to perform the operation on the second data in the second storage space, wherein the second storage space is a storage space that can support random read or random write.

In a possible example, the second mapping relationship is a mapping relationship comprising the second logical address, a physical block address corresponding to the second logical address, and a second physical page address corresponding to the physical block address.

In a possible example, the second command is to instruct to write second data, and the processor 811 is further configured to: before obtaining a second physical page address corresponding to the second logical address, establish the second mapping relationship corresponding to the second logical address; and send a second write command to the memory 820 via the interface circuit 812 to write a second mapping relationship corresponding to the second logical address into the memory 820. The processor 811 is configured to: send a fourth command to the memory 820 via the interface circuit 812 to write the second data at the second physical page address in the second storage space.

In a possible example, the second command is to instruct to read the second data, and the processor 811 is further configured to: before obtaining the second physical page address corresponding to the second logical address according to the second mapping relationship, in response to the second command, send a read command to the memory 820 via the interface circuit 812 to read the second mapping relationship corresponding to the second logical address. The processor 811 is configured to: send a fourth command to the memory 820 via the interface circuit 812 to read the second data at the second physical address in the second storage space.

In a possible example, the second mapping relationship is a three-level mapping relationship.

In a possible example, the processor 811 is further configured to: perform a first garbage collection operation on physical blocks other than blank physical blocks in the second storage space.

In a possible example, the first garbage collection operation is performed when it is detected that the number of the blank physical blocks is less than a first preset value.

In a possible example, the processor 811 is further configured to: perform a second garbage collection operation on zones other than blank zones in the first storage space.

In a possible example, the second garbage collection operation is performed when it is detected that the number of the blank zones is less than a second preset value.

In a possible example, the storage capacity of one of the zones is (1/n) times the storage capacity corresponding to the physical block of the memory 820, and wherein 1<n≤256.

The controller 810 provided by the example of the present application is used to implement the corresponding functions of each operation of the aforementioned method of operating the memory system. Each operation has been described in detail in the aforementioned method of operating the memory system and will not be repeated again.

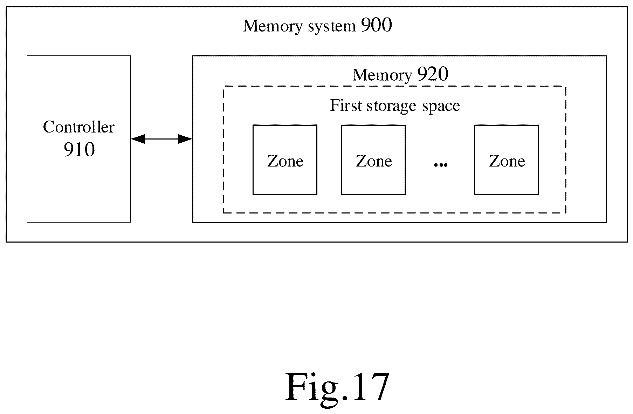

The example of the present application also provides a memory system. Referring to FIG. 17, the memory system 900 includes a controller 910 and a memory 920 coupled to the controller 910. The controller 910 is configured to: in response to a first command comprising a first logical address of first data on which an operation is to be performed is received, determine at least one zone corresponding to the first logical address, the at least one zone corresponding to a first storage space of the memory 920; obtain at least one first physical page address corresponding to the at least one zone according to a first mapping relationship and the at least one zone determined; and send a third command to the memory 920 according to the at least one first physical page address; and the memory 920 is configured to: in response to the third command, perform the operation on the first data in the first storage space, wherein a storage capacity of one of the zones is less than a storage capacity corresponding to a physical block of the memory 920, and the first storage space is a storage space that only supports sequential read and sequential write.

In a possible example, the controller 910 is configured to: determine the at least one first physical page address in a pointer mode based on the first mapping relationship and the at least one zone.

In a possible example, the first command is to instruct to write the first data, and the first command further comprises the first data, and the memory 920 is configured to: in response to the third command, write the first data at the at least one physical address in the first storage space.

In a possible example, the controller 910 is further configured to: before obtaining at least one first physical page address corresponding to the at least one zone, establish the first mapping relationship in which the at least one zone corresponds to a plurality of physical page addresses, the plurality of physical page addresses comprising the at least one first physical page address; and send a first write command to the memory 920; and the memory 920 is further configured to: in response to the first write command, write the first mapping relationship in which the at least one zone corresponds to the plurality of physical page addresses.

In a possible example, the first command is to instruct to read the first data, and the memory 920 is configured to: in response to the third command, read the first data at the at least one first physical page address in the first storage space; and send the first data to the controller.

In a possible example, the controller 910 comprises a cache in which the first mapping relationship is stored.

In a possible example, the first mapping relationship is a two-level mapping relationship.

In a possible example, the controller 910 is further configured to: in response to a second command comprising a second logical address of second data on which an operation is to be performed is received, obtain a second physical page address corresponding to the second logical address according to a second mapping relationship, the second logical address corresponding to a second storage space of the memory 920; and send a fourth command to the memory 920 according to the second physical page address; and the memory 920 is configured to: in response to the fourth command, perform the operation on the second data in the second storage space, wherein the second storage space is a storage space that can support random read or random write.

In a possible example, the second mapping relationship is a mapping relationship comprising the second logical address, a physical block address corresponding to the second logical address, and a second physical page address corresponding to the physical block address.

In a possible example, the second command is to instruct to write the second data, and the controller 910 is further configured to: before obtaining a second physical page address corresponding to the second logical address, establish the second mapping relationship corresponding to the second logical address; and send a second write command to the memory 920; and the memory 920 is configured to: in response to the fourth command, write the second data at the second physical page address in the second storage space; and in response to the second write command, write the second mapping relationship corresponding to the second logical address.

In a possible example, the second command is to instruct to read the second data, and the controller 910 is further configured to: before obtaining the second physical page address corresponding to the second logical address according to the second mapping relationship, in response to the second command, send a read command to the memory 920; and the memory 920 is further configured to: in response to the read command, read the second mapping relationship corresponding to the second logical address, and send the second mapping relationship to the controller; and in response to the fourth command, read the second data at the second physical address in the second storage space, and send the second data to the controller 910.

In a possible example, the second mapping relationship is a three-level mapping relationship.

In a possible example, the controller 910 is further configured to: perform a first garbage collection operation on physical blocks other than blank physical blocks in the second storage space. In a possible example, the first garbage collection operation is performed when it is detected that the number of the blank physical blocks is less than a first preset value.

In a possible example, the controller 910 is further configured to: perform a second garbage collection operation on zones other than blank zones in the first storage space. In a possible example, the second garbage collection operation is performed when it is detected that the number of the blank zones is less than a second preset value.

In a possible example, the storage capacity of one of the zones is (1/n) times the storage capacity corresponding to the physical block of the memory 920, and wherein 1<n≤256.

The memory system 900 provided by the example of the present application is used to implement the functions of each operation corresponding to the aforementioned method of operating the memory system. Each operation has been described in detail in the aforementioned example of the method of operating memory system and will not be repeated again.

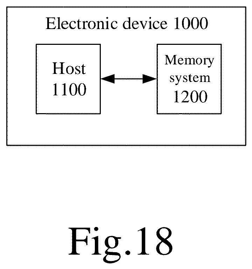

The example of the present application also provides an electronic device. Referring to FIG. 18, the electronic device 1000 includes a host 1100 and a memory system 1200. The host 1100 is coupled to the memory system 1200. The memory system 1200 may be a memory system of the above memory system examples. The electronic device 1000 provided by the example of the present application is used to implement the functions of each operation corresponding to the aforementioned method of operating the memory system. Each operation has been described in detail in the aforementioned example of the method of operating memory system and will not be repeated again.

Examples of the present application also provide a computer-readable storage medium storing therein program codes, when the computer-readable storage medium run on a device (for example, the device may be a microcontroller, a chip, a computer or a processor, and the like), the program codes stored therein can be called by the processor to perform one or more operations in the above method examples.

Based on such understandings, examples of the present application also provide a computer program product containing instructions. The technical solution of the present application is essentially embodied in the form of software product, or part thereof that contributes to the prior art or all or part of the technical solution may be embodied in the form of software product. The computer software product is stored in a storage medium and includes a number of instructions to cause a computer device (which may be a personal computer, a server, or a network device, and the like) to execute all or part of operations of the methods described in various examples of this application.

In closing, it should be noted that the forgoing descriptions are only specific examples of the present application, but the protection scope of the present application is not limited thereto. Any changes or substitutions within the technical scope disclosed in the present application shall be encompassed within the protection scope of the present application. Therefore, the protection scope of the present application should be subject to the protection scope of the claims.

## Claims

1. A method of operating a memory system, comprising:
in response to a first command comprising a first logical address of first data on which an operation is to be performed is received, determining at least one zone corresponding to the first logical address, the at least one zone corresponding to a first storage space of a memory of the memory system;
obtaining at least one first physical page address corresponding to the at least one zone according to a first mapping relationship and the at least one zone determined; and
performing the operation on the first data in the first storage space according to the at least one first physical page address, wherein
a storage capacity of one of the zones is less than a storage capacity corresponding to a physical block of the memory, and the first storage space is a storage space that only supports sequential read and sequential write.

2. The method according to claim 1, wherein the obtaining at least one first physical page address corresponding to the at least one zone according to a first mapping relationship and the at least one zone determined comprises:
determining the at least one first physical page address in a pointer mode based on the first mapping relationship and the at least one zone.

3. The method according to claim 1 or 2, wherein the first command is to instruct to write the first data, and the first command further comprises the first data, and
the performing the operation on the first data in the first storage space according to the at least one first physical page address comprises:
writing the first data at the at least one physical address in the first storage space.

4. The method according to claim 3, further comprising:
before the obtaining at least one first physical page address corresponding to the at least one zone according to a first mapping relationship and the at least one zone determined, establishing the first mapping relationship in which the at least one zone corresponds to a plurality of physical page addresses, the plurality of physical page addresses comprising the at least one first physical page address; and
writing the first mapping relationship in which the at least one zone corresponds to the plurality of physical page addresses into the memory.

5. The method according to claim 1 or 2, wherein the first command is to instruct to read the first data, and
the performing the operation on the first data in the first storage space according to the at least one first physical page address comprises:
reading the first data at the at least one first physical page address in the first storage space.

6. The method according to any one of claims 1 to 5, wherein a controller of the memory system comprises a cache in which the first mapping relationship is stored.

7. The method according to any one of claims 1 to 6, wherein the first mapping relationship is a two-level mapping relationship.

8. The method according to any one of claims 1 to 7, further comprising:
in response to a second command comprising a second logical address of second data on which an operation is to be performed is received, obtaining a second physical page address corresponding to the second logical address according to a second mapping relationship, the second logical address corresponding to a second storage space of the memory; and
performing the operation on the second data in the second storage space according to the second physical page address, wherein
the second storage space is a storage space that can support random read or random write.

9. The method according to claim 8, wherein the second mapping relationship is a mapping relationship comprising the second logical address, a physical block address corresponding to the second logical address, and a second physical page address corresponding to the physical block address.

10. The method according to claim 8 or 9, wherein the second command is to instruct to write the second data, and the method further comprises:
before the obtaining a second physical page address corresponding to the second logical address according to a second mapping relationship and the second logical address, establishing the second mapping relationship corresponding to the second logical address; and
writing the second mapping relationship corresponding to the second logical address into the memory, wherein
the performing the operation on the second data in the second storage space according to the second physical page address comprises:
writing the second data at the second physical page address in the second storage space.

11. The method according to claim 8 or 9, wherein the second command is to instruct to read the second data, and the method further comprises:
before the obtaining a second physical page address corresponding to the second logical address according to a second mapping relationship, in response to the second command, reading the second mapping relationship corresponding to the second logical address from the memory, wherein
the performing the operation on the second data in the second storage space according to the second physical page address comprises:
reading the second data at the second physical address in the second storage space.

12. The method according to any one of claims 8 to 11, wherein the second mapping relationship is a three-level mapping relationship.

13. The method according to any one of claims 8 to 12, further comprising:
performing a first garbage collection operation on physical blocks other than blank physical blocks in the second storage space.

14. The method according to claim 13, wherein the first garbage collection operation is performed when it is detected that the number of the blank physical blocks is less than a first preset value.

15. The method according to any one of claims 1 to 14, further comprising:
performing a second garbage collection operation on zones other than blank zones in the first storage space.

16. The method according to claim 15, wherein the second garbage collection operation is performed when it is detected that the number of the blank zones is less than a second preset value.

17. The method according to any one of claims 1 to 16, wherein the storage capacity of one of the zones is (1/n) times the storage capacity corresponding to the physical block of the memory of the memory system, and wherein 1<n≤256.

18. A controller comprising:
a processor; and
an interface circuit coupled to the processor and a memory, wherein
the processor is configured to:
in response to a first command comprising a first logical address of first data on which an operation is to be performed is received, determine at least one zone corresponding to the first logical address, the at least one zone corresponding to a first storage space of the memory;
obtain at least one first physical page address corresponding to the at least one zone according to a first mapping relationship and the at least one zone determined; and
send a third command to the memory via the interface circuit to perform the operation on the first data according to the at least one first physical page address, wherein
a storage capacity of one of the zones is less than a storage capacity corresponding to a physical block of the memory, and the first storage space is a storage space that only supports sequential read and sequential write.

19. A memory system, comprising:
a memory; and
a controller coupled to the memory and configured to:
in response to a first command comprising a first logical address of first data on which an operation is to be performed is received, determine at least one zone corresponding to the first logical address, the at least one zone corresponding to a first storage space of the memory;
obtain at least one first physical page address corresponding to the at least one zone according to a first mapping relationship and the at least one zone determined; and
send a third command to the memory according to the at least one first physical page address, wherein
the memory is configured to:
in response to the third command, perform the operation on the first data in the first storage space, wherein
a storage capacity of one of the zones is less than a storage capacity corresponding to a physical block of the memory, and the first storage space is a storage space that only supports sequential read and sequential write.

20. The memory system according to claim 19, wherein the controller is configured to:
determine the at least one first physical page address in a pointer mode based on the first mapping relationship and the at least one zone.

21. The memory system according to claim 19 or 20, wherein the first command is to instruct to write the first data, and the first command further comprises the first data, and
the memory is configured to:
in response to the third command, write the first data at the at least one physical address in the first storage space.

22. The memory system according to claim 21, wherein,
the controller is further configured to:
before the obtaining at least one first physical page address corresponding to the at least one zone, establish the first mapping relationship in which the at least one zone corresponds to a plurality of physical page addresses, the plurality of physical page addresses comprising the at least one first physical page address; and
send a first write command to the memory; and
the memory is further configured to:
in response to the first write command, write the first mapping relationship in which the at least one zone corresponds to the plurality of physical page addresses.

23. The memory system according to claim 19 or 20, wherein the first command is to instruct to read the first data, and
the memory is configured to:
in response to the third command, read the first data at the at least one first physical page address in the first storage space; and
send the first data to the controller.

24. The memory system according to any one of claims 19 to 23, wherein the controller comprises a cache in which the first mapping relationship is stored.

25. The memory system according to any one of claims 19 to 24, wherein the first mapping relationship is a two-level mapping relationship.

26. The memory system according to any one of claims 19 to 25, wherein
the controller is further configured to:
in response to a second command comprising a second logical address of second data on which an operation is to be performed is received, obtain a second physical page address corresponding to the second logical address according to a second mapping relationship, the second logical address corresponding to a second storage space of the memory; and
send a fourth command to the memory according to the second physical page address, and
the memory is configured to:
in response to the fourth command, perform the operation on the second data in the second storage space, wherein
the second storage space is a storage space that can support random read or random write.

27. The memory system according to claim 26, wherein the second mapping relationship is a mapping relationship comprising the second logical address, a physical block address corresponding to the second logical address, and a second physical page address corresponding to the physical block address.

28. The memory system according to claim 26 or 27, wherein the second command is to instruct to write the second data, and
the controller is further configured to:
before the obtaining a second physical page address corresponding to the second logical address, establish the second mapping relationship corresponding to the second logical address; and
send a second write command to the memory, wherein
the memory is configured to:
in response to the fourth command, write the second data at the second physical page address in the second storage space; and
in response to the second write command, write the second mapping relationship corresponding to the second logical address.

29. The memory system according to claim 26 or 27, wherein the second command is to instruct to read the second data, and
the controller is further configured to:
before obtaining the second physical page address corresponding to the second logical address according to the second mapping relationship, in response to the second command, send a read command to the memory, and
the memory is further configured to:
in response to the read command, read the second mapping relationship corresponding to the second logical address, and send the second mapping relationship to the controller; and
in response to the fourth command, read the second data at the second physical address in the second storage space, and send the second data to the controller.

30. The memory system according to any one of claims 26 to 29, wherein the second mapping relationship is a three-level mapping relationship.

31. The memory system according to any one of claims 26 to 30, wherein the controller is further configured to:
perform a first garbage collection operation on physical blocks other than blank physical blocks in the second storage space.

32. The memory system according to claim 31, wherein the first garbage collection operation is performed when it is detected that the number of the blank physical blocks is less than a first preset value.

33. The memory system according to any one of claims 19 to 32, wherein the controller is further configured to:
perform a second garbage collection operation on zones other than blank zones in the first storage space.

34. The memory system according to claim 33, wherein the second garbage collection operation is performed when it is detected that the number of the blank zones is less than a second preset value.

35. The memory system according to any one of claims 19 to 34, wherein the storage capacity of one of the zones is (1/n) times the storage capacity corresponding to the physical block of the memory, and wherein I<n≤256.

36. An electronic device, comprising:
a host; and
a memory system according to any one of claims 19 to 35.

37. A computer-readable storage medium storing therein a program code that, when called by a processor, is to perform a method according to any one of claims 1 to 17.
